Europäisches Patentamt

European Patent Office

Office européen des brevets

(11) Veröffentlichungsnummer: **0 044 987**
A2

(12) # EUROPÄISCHE PATENTANMELDUNG

(21) Anmeldenummer: **81105404.8**

(51) Int. Cl.³: **H 02 K 1/06**

(22) Anmeldetag: **10.07.81**

(30) Priorität: **25.07.80 DE 3028269**

(43) Veröffentlichungstag der Anmeldung: **03.02.82**
**Patentblatt 82/5**

(84) Benannte Vertragsstaaten: **AT CH DE FR GB LI SE**

(71) Anmelder: **SIEMENS AKTIENGESELLSCHAFT Berlin und München, Postfach 22 02 61, D-8000 München 22 (DE)**

(72) Erfinder: **Rosenberg, Heinz, Dipl.-Ing., Ölzeltgasse 15, A-1238 Wien (AT)**

(54) **Permanentmagneterregte elektrische Maschine.**

(57) Die Erfindung betrifft eine permanentmagneterregte elektrische Maschine, bei der zwischen den Permanentmagneten und dem Ankerluftspalt geblechte Polschuhe vorgesehen sind. Um einerseits eine Flußkonzentration zu erreichen, andererseits jedoch eine durch das Ankerquerfeld hervorgerufene Schwächung des Nutzfeldes weitgehend zu unterdrücken, sind zumindest bei einem Teil der Polschuhe (6 bzw. 10) die Bleche parallel zur Rotationsachse der Maschine angeordnet und die einzelnen Bleche durch amagnetische Schichten voneinander getrennt.

EP 0 044 987 A2

SIEMENS AKTIENGESELLSCHAFT   Unser Zeichen 0044987
Berlin und München   80 P 3 1 2 3 E

Permanentmagneterregte elektrische Maschine

Die Erfindung bezieht sich auf eine permanentmagneterregte elektrische Maschine, bei der zwischen den Permanentmagneten und am Ankerluftspalt geblechte Polschuhe vorgesehen sind.

Eine solche Maschine ist durch die DE-OS 23 10 948 bekannt. Die Polschuhe sind bei dieser Maschine quer zur Richtung der Rotationsachse geblecht. Durch solche Polschuhe zwischen den Magneten und dem Ankerluftspalt ist zwar eine Flußkonzentration, d.h. Erhöhung der Flußdichte im Luftspalt gegenüber der im Magneten möglich, jedoch weisen diese Polschuhe ohne besondere Maßnahmen eine hohe magnetische Leitfähigkeit für das Ankerquerfeld auf. Von einer gewissen Maschinenbelastung an führt dies zu einer Schwächung des magnetischen Nutzflusses durch teilweise Polschuh- und Ankerzahnsättigung und damit zu einer Verminderung der Maschinenleistung sowie fallweise auch zu unstabilem Drehzahlverhalten. Diese von der Ankerrückwirkung verursachte Feldschwächung vermindert somit die Maschinenausnutzung, außerdem verschlechtert ein starkes Ankerquerfeld sowohl die dynamischen Eigenschaften als auch bei Kommutatormaschinen - insbesondere solchen ohne Wendepole - die Kommutierung der Maschine. Der Aufwand für eine das Ankerquerfeld aufhebende Kompensationswicklung kommt bei permanentmagneterregten Maschinen im allgemeinen nicht in Frage. Daher hat man versucht - siehe z.B. DE-OS 23 10 948 -, die erwähnten Nachteile durch eine Unterteilung der Polschuhe in zwei Hälften mit tangentialem Abstand, der für das Querfeld einen magneten Widerstand bildet, zu vermeiden. Die Wirksamkeit dieser Maßnahmen ist jedoch sehr begrenzt, da der erwähnte Abstand mit Rücksicht auf die Ausnutzung

M1 2 Ca / 21.07.1980

der Maschine nur einen kleinen Bruchteil des gesamten Polbogens betragen kann.

Um die mit dem Polschuhen verbundenen Nachteile auszuschalten, hat man auch schon ganz auf Polschuhe verzichtet.
Ohne Polschuhe ist jedoch die magnetische Flußdichte im
Luftspalt und damit die Ausnutzung der Maschine durch den
Magnetwerkstoff bzw. den hierfür wirtschaftlich vertretbaren Aufwand begrenzt. Außerdem sind jene Magnetwerkstoffe,
die eine höhere Flußdichte ermöglichen - Alnico und Kobalt-
Seltene-Erden - metallischer Natur, was aufgrund ihrer
guten elektrischen Leitfähigkeit bei gleichzeitig niedriger
Permeabilität für Fremdfelder zu sehr großen Oberflächenverlusten durch den Einfluß der Ankernutung führt.

Der Erfindung liegt die Aufgabe zugrunde, eine permanentmagneterregte Maschine zu finden, bei der einerseits eine
Flußkonzentration ermöglicht, andererseits jedoch das
Ankerquerfeld und damit die von diesem Feld bewirkte
Schwächung des Nutzfeldes weitgehend unterdrückt ist und
bei der außerdem die durch die Ankernutung bedingten Oberflächenverluste auf ein unschädliches Maß begrenzt sind.

Die Aufgabe wird erfindungsgemäß dadurch gelöst, daß die
Bleche zumindest bei einem Teil der Polschuhe parallel zur
Rotationsachse der Maschine angeordnet und die einzelnen
Bleche voneinander durch amagnetische Schichten getrennt
sind.

Eine besonders weitgehende Unterdrückung des Querfeldes
wird nach der Erfindung dadurch erzielt, daß zwischen den
einzelnen Blechen der Polschuhe amagnetische Zwischenlagen
angeordnet sind, deren Dicke von der Größenordnung der
Blechdicke ist.

Die Erfindung wird nachstehend anhand der Zeichnung näher
erläutert. Es zeigt

0044987

Fig. 1 den schematischen Querschnitt einer vierpoligen
Maschine mit einem permanentmagneterregten Ständer,

Fig. 2 einen schematischen Längsschnitt der in Fig. 1 dargestellten Maschine,

Fig. 3 den schematischen Querschnitt einer sechspoligen
Maschine mit einem permanentmagneterregten Läufer
und

Fig. 4 einen schematischen Längsschnitt der Maschine nach
Fig. 3.

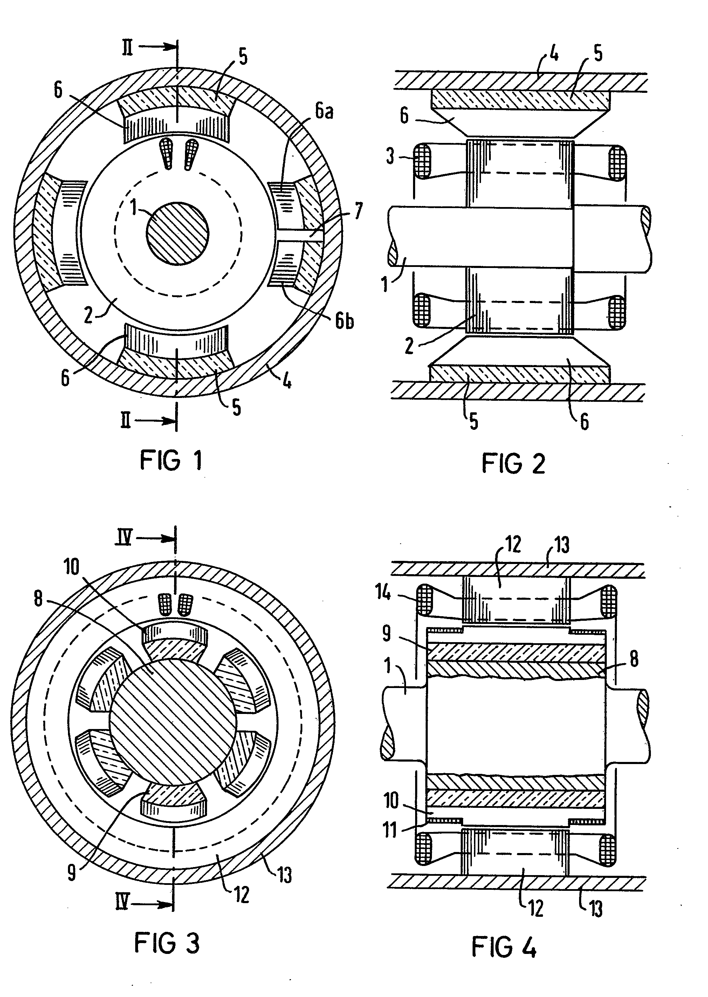

Gemäß Fig. 1 und 2 ist auf einer Welle 1 ein Läufer-Blechpaket 2 angeordnet, das in Nuten eine Ankerwicklung 3 trägt. Ein Ständergehäuse 4 bildet das magnetische Rückschlußjoch für die schalenförmigen Permanentmagnete 5, an deren Innenseite geblechte Polschuhe 6 angeordnet sind. Die durch amagnetische Schichten getrennten Bleche dieser Polschuhe 6 sind parallel zur Rotationsachse der Maschine angeordnet. Dadurch ist ihr magnetischer Widerstand sowohl in axialer Richtung als auch in Richtung zum Ankerluftspalt klein, was zwanglos eine Flußkonzentration ermöglicht. Hierzu werden, wie aus Fig. 2 ersichtlich, die Permanentmagnete 5 und die zugeordneten Berührungsflächen der Polschuhe 6 in axialer Richtung größer bemessen als die den Ankerluftspalt begrenzende Polschuhfläche.

In tangentialer Richtung ergeben die amagnetischen Schichten zwischen den einzelnen Blechen bereits dann einen erheblichen magnetischen Widerstand für das Ankerquerfeld, wenn diese Schichten nur aus der bei Dynamoblechen üblichen Papierisolation bestehen. Sind jedoch gemäß einer vorteilhaften Erfindungsvariante die benachbarten Bleche durch amagnetische Zwischenlagen, deren Dicke von der Größenordnung der Blechdicke ist, getrennt, dann sind für das Ankerquerfeld etwa 30 % bis 50 % seines Weges im Polschuh amagnetisch, wodurch die Stärke dieses Feldes auch bei hoher Ankerdurchflutung auf ein unschädliches Maß beschränkt bleibt. Gegebenenfalls kann dies noch durch die

- 4 -     VPA 80 P 3 1 2 3 E     00 44 987

an sich bekannte Maßnahme einer Unterteilung des Polschuhes in zwei Hälften 6a und 6b mit tangentialem Abstand 7 unterstützt werden, wie es an einem Pol in Fig. 1 rechts dargestellt ist. Dabei kann sich die Unterteilung auch auf den Magneten erstrecken.

Die Polausbildung nach den Fig. 1 und 2 kann auch für eine Maschine mit permanentmagneterregtem Außenläufer angewandt werden.

Bei der Maschine nach Fig. 3 und 4 besitzt die Welle 1 einen im Durchmesser verstärkten Teil 8, auf dem die als Schalenmagnete 9 ausgebildeten Permanentmagnete mit den Polschuhen 10 angeordnet sind. Ein Ständerblechpaket 12 sitzt in einem Gehäuse 13 und trägt in Nuten eine Ankerwicklung 14. Zwecks Flußkonzentration sind die Schalenmagnete 9 und die achsparallel geblechten Polschuhe 10 in axialer Richtung länger als das Ständerblechpaket 12. Außerhalb des Ankerluftspaltes sind die Polschuhe abgesetzt und mit amagnetischen Bandagen 11 versehen.

Die amagnetischen Zwischenlagen bestehen erfindungsgemäß entweder nur aus isolierendem Werkstoff oder aus metallischem Werkstoff mit isolierender Beschichtung. Durch die Isolation wird die Ausbildung von durch die Ankernutung hervorgerufenen Wirbelströmen so stark unterdrückt, daß die Oberflächenverluste des Polschuhes auf ein unschädliches Maß beschränkt bleiben. Für den metallischen Teil der Zwischenlagen ist ein Werkstoff mit guter elektrischer Leitfähigkeit - z.B. Kupfer oder Aluminium - vorzusehen, wodurch die Querfeldinduktivität der Ankerwicklung gedämpft und damit das dynamische Verhalten und fallweise auch die Kommutierung der Maschine zusätzlich verbessert werden.

Um die Verteilung der Luftspalt-Flußdichte in Umfangsrichtung zu beeinflussen, können erfindungsgemäß die

0044987

amagnetischen Zwischenlagen in Zuordnung zur Lage am
Polbogen verschiedene Dicken aufweisen.

Wenn die einzelnen Polschuhbleche das gleiche Profil erhalten, wie es technologisch am wirtschaftlichsten ist, so
ergibt die erfindungsgemäße Anordnung an Schalenmagneten
eine Erweiterung des geometrischen Ankerluftspaltes von
der Polmitte nach außen. Dieser Verlauf des Luftspaltes,
der aus Fig. 1 sowie aus Fig. 3 zu entnehmen ist, bewirkt
einen günstigen Einfluß auf die Anker-Eisenverluste und
die Spannungskurve. bzw. Kommutierung der Maschine.


8 Patentansprüche
4 Figuren

Patentansprüche

1. Permanentmagneterregte elektrische Maschine, bei der zwischen den Permanentmagneten und dem Ankerluftspalt geblechte Polschuhe vorgesehen sind, d a d u r c h g e - k e n n z e i c h n e t , daß die Bleche zumindest bei einem Teil der Polschuhe (6 bzw. 10) parallel zur Rotationsachse der Maschine angeordnet und die einzelnen Bleche voneinander durch amagnetische Schichten getrennt sind.

2. Permanentmagneterregte Maschine nach Anspruch 1, d a - d u r c h g e k e n n z e i c h n e t , daß zwischen den einzelnen Blechen der Polschuhe (6 bzw. 10) amagnetische Zwischenlagen angeordnet sind, deren Dicke von der Größenordnung der Blechdicke ist.

3. Permanentmagneterregte Maschine nach einem der vorhergehenden Ansprüche, d a d u r c h g e k e n n - z e i c h n e t , daß die amagnetischen Schichten bzw. Zwischenlagen aus elektrisch isolierendem Werkstoff bestehen.

4. Permanentmagneterregte Maschine nach Anspruch 2, d a - d u r c h g e k e n n z e i c h n e t , daß zumindest ein Teil der Zwischenlagen jeweils aus metallischem Werkstoff und mindestens einer elektrisch isolierenden Schicht besteht.

5. Permanentmagneterregte Maschine nach einem der Ansprüche 2 bis 4, d a d u r c h g e k e n n z e i c h n e t , daß die Zwischenlagen in Zuordnung zur Lage am Polbogen verschiedene Dicken aufweisen.

6. Permanentmagneterregte Maschine nach einem der vorhergehenden Ansprüche, d a d u r c h g e k e n n - z e i c h n e t , daß die Berührungsfläche zwischen Pol-

0044987

schuhen (6 bzw. 10) und Permanentmagneten (5 bzw. 9) eine größere axiale Ausdehnung aufweist als die den Ankerluftspalt begrenzende Polschuhfläche.

7. Permanentmagneterregte Maschine nach einem der vorhergehenden Ansprüche, d a d u r c h   g e k e n n - z e i c h n e t , daß die Polschuhe (6) jeweils in mindestens zwei mit tangentialem Abstand voneinander angeordnete Blechpakete (6a und 6b) unterteilt sind.

8. Permanentmagneterregte Maschine nach Anspruch 7, d a - d u r c h   g e k e n n z e i c h n e t , daß die Permanentmagnete (5) entsprechend den Polschuhen (6) an der gleichen Stelle unterteilt sind.

FIG 1

FIG 2

FIG 3

FIG 4